# EUROPÄISCHE PATENTANMELDUNG

(11) **EP 4 438 349 A1**
(43) Veröffentlichungstag der Anmeldung: **02.10.2024**
(21) Anmeldenummer: 23165578.8
(22) Anmeldetag: 30.03.2023
(51) Int. Cl.: B60D 1/62, B60Q 1/30, B60R 16/023

(54) **ANHÄNGERANSCHLUSSGERÄT**

(71) Anmelder: ConWys AG, 6023 Rothenburg (CH)
(72) Erfinder: WYSTRON, Alexander, 6005 Luzern (CH)
(74) Vertreter: Brinkmann & Partner

(57) **Zusammenfassung**

Die Erfindung betrifft ein Anhängeranschlussgerät (1) zur elektrischen und elektronischen Anbindung eines Anhängers an ein Fahrzeug, umfassend einen Schaltungsaufbau (2) für die elektrische Verbindung mit einer elektrischen Energieversorgungsvorrichtung (4) des Fahrzeugs, beispielsweise mit einer Schnittstelle zur Verbindung mit einem fahrzeugseitigen Daten-Bus-System und einer prozessorbasierten Steuerung von elektrischen Funktionen des Anhängers, wobei der Schaltungsaufbau (2) über eine, mit einer Sicherung (5) abgesicherte Speiseleitung (3) mit der Energieversorgungsvorrichtung (4) des Fahrzeugs verbunden ist. Eine Verbesserung der Sicherheit des Anhängeanschlussgerätes (1) ergibt sich dadurch, dass der Schaltungsaufbau (2) ergänzend über eine elektrische Leitung (7) mit einer Speiseleitung (8) für einen elektrischen Anschluss einer Beleuchtungseinrichtung (9) des Fahrzeugs verbunden ist, wobei die elektrische Leitung (7) nur bestromt ist, wenn die Speiseleitung (3) keine elektrische Energie an den Schaltungsaufbau (2) liefert und dass der Schaltungsaufbau (2) mit einem Signalgeber (13) verbunden ist, der bei bestromter elektrischer Leitung (7) aktivierbar ist.

## Beschreibung

Die Erfindung betrifft ein Anhängeranschlussgerät zur elektrischen und elektronischen Anbindung eines Anhängers an ein Fahrzeug, umfassend einen Schaltungsaufbau für die elektrische Verbindung mit einer elektrischen Energieversorgungsvorrichtung des Fahrzeugs, beispielsweise mit einer Schnittstelle zur Verbindung mit einem fahrzeugseitigen Daten-Bus-System und einer prozessorbasierten Steuerung von elektrischen Funktionen des Anhängers, wobei der Schaltungsaufbau über eine, mit einer Sicherung abgesicherte Speiseleitung mit der Energieversorgungsvorrichtung des Fahrzeugs verbunden ist.

Anhängeranschlussgeräte der vorgenannten, das heißt gattungsgemäßen Art sind aus dem Stand der Technik an sich bekannt, so zum Beispiel aus der EP 1 702 802 A1, der EP 1 886 848 A1, der EP 1 967 393 A1 und der EP 2 374 637 A1. Es handelt sich in der Regel um ein Anhängeranschlussgerät mit einem Gehäuse, einer innerhalb des Gehäuses angeordneten elektronischen Schaltung und einer Anschlusskontakteinheit zum Anschließen elektrischer Komponenten eines Anhängers, eines Fahrradheckträgers und/oder dergleichen.

Anhängeranschlussgeräte dienen im Allgemeinen dazu, eine elektrische Anlage eines an einem Zugfahrzeug angekoppelten Anhängers oder Fahrradheckträgers in durch das Zugfahrzeug vorgebbarerer Weise zu steuern. Dabei kann die elektrische Anlage des Anhängers oder des Fahrradheckträgers eine Mehrzahl unterschiedlicher elektrischer Komponenten umfassen. Derartige elektrische Komponenten betreffen insbesondere die Beleuchtung, das heißt beispielsweise die Rückleuchten, die Bremsleuchten und/oder dergleichen Leuchten. Zum Anhänger oder Fahrradträger besteht eine elektrische Verbindung. Auf Seiten des Zugfahrzeugs kann das Anhängeranschlussgerät über eine Daten-Bus-Verbindung, beispielsweise eine CAN-Bus-Verbindung mit der Steuerung des Fahrzeuges verbunden sein. Es ist so eine digitale Datenverbindung gegeben. Ebenso kann das Anhängeranschlussgerät über analoge Signalleitungen mit dem Fahrzeug verbunden sein.

Anhängeranschlussgeräte der gattungsgemäßen Art können herstellerseitig ab Werk im Zugfahrzeug installiert sein. Eine Alternative ist die Nachrüstung, weshalb gattungsgemäße Anhängeranschlussgeräte auch als Bestandteil sogenannter Nachrüstsätze erhältlich sind. Derartige Nachrüstsätze beinhalten neben einem Anhängeranschlussgerät die aus einzelnen Kabelsträngen gebildete Verkabelung, die anwenderseitig zu installieren und insbesondere an das zugfahrzeugseitige Bordnetz anzuschließen ist. Dabei verfügen die aus dem Stand der Technik vorbekannten Anhängeranschlussgeräte zumindest über eine Anschlusskontakteinheit, die der elektrischen Verbindung des Anhängeranschlussgerätes mit dem anhängerseitigen Bordnetz dient. In aller Regel ist die Anschlusskontakteinheit nach Art einer Steckdose ausgebildet, die im endfertig montierten Zustand einen hierzu korrespondierend ausgebildeten Stecker eines zum Anhänger reichenden Kabelstranges aufnimmt.

Für den bestimmungsgemäßen Anschluss eines Anhängers an ein Zugfahrzeug bedarf es zum einen einer mechanischen Verbindung sowie zum anderen einer elektrischen Verbindung. Die mechanische Verbindung erfolgt in der Regel über eine anhängerseitige Deichsel einerseits und einer zugfahrzeugseitigen Anhängerkupplung andererseits. Die elektrische Verbindung erfolgt durch eine steckbare Kabelverbindung. Es sind insofern das sogenannte Bordnetz des Zugfahrzeugs auf der einen Seite und das sogenannte Anhängernetz auf der anderen Seite zu unterscheiden. Zwecks lösbarer elektrischer Verbindung ist zugfahrzeugseitig zumeist eine Anhängersteckdose vorgesehen, in die im bestimmungsgemäßen Verwendungsfall ein anhängerseitiger Stecker eines Anschlusskabels gesteckt ist. Typischerweise sind die Steckdose und der Stecker 13-polig oder 7-polig ausgeführt.

Das Anhängeranschlussgerät wird hierbei mit elektrischer Energie durch das fahrzeugseitige Bordnetz versorgt. In der Regel sind hier zwei Speiseleitungen vorgesehen, die an das Bordnetz angeschlossen und einzeln abgesichert sind. Diese Ausgestaltung ermöglicht eine Versorgung des Anhängeranschlussgerätes mit elektrischer Energie auch für den Fall, dass die Sicherung in einer Speiseleitung ausfällt, so dass über diese Speiseleitung keine elektrische Energie an das Anhängeranschlussgerät geliefert werden kann. In diesem Fall übernimmt die zweite Speiseleitung eine sozusagen redundante Energieversorgung, so dass auch in diesem Fall die Beleuchtung des Anhängers funktionsfähig bleibt. Ein solcher Defekt wird oftmals von einem Fahrzeugführer nicht unmittelbar erkannt, so dass sich hieraus beispielsweise bei nur einer Speiseleitung eine für ein Fahrzeuggespann gefährliche Situation bei Fahrten in der Nacht durch Ausfall der kompletten Anhängerbeleuchtung ergeben kann.

Auf der anderen Seite ist die Ausgestaltung mit zwei Speiseleitungen für das Anhängeranschlussgerät technisch aufwändig und erhöht damit die Kosten beispielsweise eines Nachrüstsatzes sowohl hinsichtlich der Bauteile, als auch hinsichtlich des Montageaufwands.

Ausgehend von dem voranstehend beschriebenen Stands der Technik liegt der Erfindung die **Aufgabe** zugrunde, ein Anhängeranschlussgerät der gattungsgemäßen Art derart weiterzuentwickeln und zu verbessern, dass dieses hinsichtlich des konstruktionellen Aufwands und hinsichtlich des Montageaufwands verbessert ist und dennoch eine ausreichende Betriebssicherheit aufweist.

Zur technischen **Lösung** dieser Aufgabe wird ein Anhängeranschlussgerät mit den Merkmalen des Patentanspruchs 1 vorgeschlagen. Weitere Vorteile und Merkmale ergeben sich aus den Unteransprüchen.

Erfindungsgemäß ist vorgesehen, dass der Schaltungsaufbau ergänzend über eine elektrische Leitung mit einer Speiseleitung für einen elektrischen Anschluss einer Beleuchtungseinrichtung des Fahrzeugs verbunden ist, wobei die elektrische Leitung nur bestromt ist, wenn die Speiseleitung keine elektrische Energie an den Schaltungsaufbau liefert und dass der Schaltungsaufbau mit einem Signalgeber verbunden ist, der bei bestromter elektrischer Leitung aktivierbar ist.

Das Anhängeranschlussgerät hat demzufolge einen Schaltungsaufbau, der einerseits über die Speiseleitung mit dem Bordnetz des Fahrzeuges verbunden ist. Diese Speiseleitung ist durch eine Sicherung abgesichert ist. Andererseits ist der Schaltungsaufbau ergänzend über eine weitere elektrische Leitung an eine Speiseleitung für einen elektrischen Anschluss einer Beleuchtungsvorrichtung des Fahrzeugs angeschlossen. Diese elektrische Leitung wird jedoch nur dann bestromt, wenn die Speiseleitung keine elektrische Energie an den Schaltungsaufbau liefert. Wird daher über den Schaltungsaufbau detektiert, dass die Speiseleitung keine elektrische Energie liefert, so schaltet der Schaltungsaufbau die weitere elektrische Leitung frei, die dann die Versorgung des Anhängeranschlussgerätes mit elektrischer Energie übernimmt. Die elektrische Leitung ist hierbei an eine elektrische Leitung angeschlossen, die das Bordnetz des Fahrzeugs mit einer Beleuchtungseinrichtung des Fahrzeugs verbindet. Auch diese elektrische Leitung ist über eine Sicherung abgesichert. Fällt diese Sicherung aus, so wird in der Regel ein Defekt im Fahrzeug angezeigt. Zu diesem Zweck ist der Schaltungsaufbau ergänzend mit einem Signalgeber verbunden, der bei bestromter elektrischer Leitung aktivierbar ist.

Fällt die Speiseleitung für den Schaltungsaufbau aus, weil beispielsweise die darin geschaltete Sicherung ausfällt, so wird das Anhängeranschlussgerät über die elektrische Leitung mit elektrischer Energie versorgt. Um dem Fahrzeugführer anzuzeigen, dass die Speiseleitung ausgefallen und die Versorgung des Anhängeranschlussgeräts mit elektrischer Energie über die weitere elektrische Leitung erfolgt, ist der Signalgeber vorgesehen, der regelmäßig bei Stromfluss über die Speiseleitung für den elektrischen Anschluss des Fahrzeugs aktiviert wird.

Andererseits erhält der Fahrzeugführer bei einem Ausfall der Speiseleitung für den elektrischen Anschluss einer Beleuchtungseinrichtung des Fahrzeugs ein entsprechendes, vom Fahrzeug bereits generiertes Signal, beispielsweise in einem Bordcomputer oder als optisches Signal im Anzeigenbereich des Fahrzeugs. Dem Fahrzeugführer kann somit sowohl angezeigt werden, dass die Speiseleitung für das Anhängeranschlussgerät nicht mit elektrischer Energie über die Speiseleitung versorgt wird oder dass die Speiseleitung für den elektrischen Anschluss einer Beleuchtungseinrichtung ausgefallen ist. Hierdurch ist es dem Fahrzeugführer zeitnah möglich, eine gefährliche Situation im Anhängerbetrieb, beispielsweise durch einen Ausfall der Beleuchtung zu erkennen und hierauf zu reagieren.

Nach einem weiteren Merkmal der Erfindung ist vorgesehen, dass der Signalgeber als optischer und/oder akustischer Signalgeber ausgebildet und für einen Benutzer des Fahrzeugs während eines Betriebs des Fahrzeugs wahrnehmbar ist. Zu diesem Zweck kann beispielsweise ein Schallgenerator im Fahrzeug verbaut sein, der mit dem Anhängeranschlussgerät verbunden ist. Der akustische Signalgeber kann auch Bestandteil des Schaltungsaufbaus sein, soweit das von dem akustischen Signalgeber ausgegebene akustische Signal auch während des Fahrzustands des Fahrzeugs für den Fahrzeugführer hinreichend wahrnehmbar ist. Alternativ kann der Signalgeber als optischer Signalgeber ausgebildet sein, beispielsweise als Leuchtmittel im Bereich der Anzeigevorrichtung des Fahrzeugs. Eine weitere Alternative besteht darin, dass der Signalgeber als Funksender, insbesondere als Bluetooth-Schnittstelle ausgebildet ist. Über diesen Funksender beziehungsweise die Bluetooth-Schnittstelle kann beispielsweise ein Signal auf ein Smartphone des Fahrzeugführers oder einer anderen Person im Fahrzeug übermittelt werden. Dies gilt auch für in das Fahrzeug integrierte Telefonsysteme.

Es ist nach einem weiteren Merkmal der Erfindung vorgesehen, dass die elektrische Leitung mittels Speiseleitung für ein Bremslicht des Fahrzeugs verbunden ist. Bei dieser Ausgestaltung wird das Signal immer dann erzeugt, wenn die Speiseleitung keine elektrische Energie an den Schaltungsaufbau des Anhängeranschlussgerätes liefert, so dass über die elektrische Leitung zum Schaltungsaufbau elektrische Energie von der Speiseleitung des Bremslichts des Fahrzeugs an den Schaltungsaufbau geleitet wird, wenn der Fahrzeugführer das Bremspedal des Fahrzeugs betätigt.

Schließlich ist nach einem weiteren Merkmal der Erfindung vorgesehen, dass der Schaltungsaufbau eine Vorrichtung aufweist, die den Durchfluss elektrischer Energie über die elektrische Leitung sperrt, soweit der Schaltungsaufbau über die Speiseleitung mit elektrischer Energie versorgt ist, und die, die elektrische Leitung zur Versorgung des Schaltungsaufbaus mit elektrischer Energie freischaltet, soweit der Schaltungsaufbau über die Speiseleitung nicht mit elektrischer Energie versorgt ist.

Durch diese Vorrichtung ist sichergestellt, dass der Schaltungsaufbau nicht parallel über zwei Speiseleitungen mit elektrischer Energie versorgt wird. Es ist also eine Wechselschaltung vorgesehen, die jeweils nur die Speiseleitung oder die weitere elektrische Leitung freischaltet, um den Schaltungsaufbau mit elektrischer Energie zu versorgen.

Weitere Merkmale und Vorteile der Erfindung ergeben sich aus der nachfolgenden Beschreibung der zugehörigen Zeichnung. In der Zeichnung zeigen:
- Figur 1: einen systematischen Aufbau eines erfindungsgemäßen Anhängeranschlussgerätes;
- Figur 2: einen Schaltungsaufbau einer Vorrichtung zur Durchleitung elektrischer Energie in einem Anhängeranschlussgerät nach Figur 1;
- Figur 3: einen Schaltungsaufbau für einen akustischen Signalgeber des Anhängeranschlussgeräts nach Figur 1 und
- Figur 4: einen Schaltungsaufbau für optische Signalgeber des Anhängeranschlussgeräts nach Figur 1.

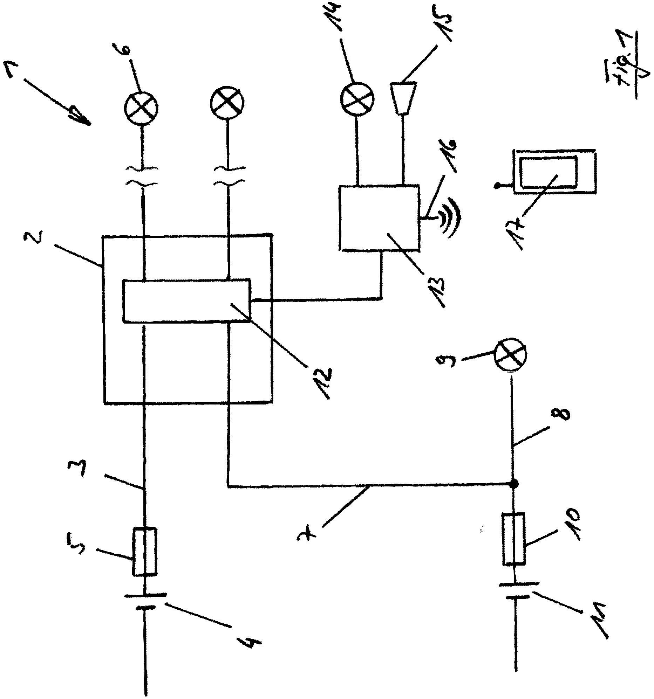

In Figur 1 ist ein Anhängeranschlussgerät 1 in einer Prinzipskizze dargestellt. Das Anhängeranschlussgerät 1 dient der elektrischen und elektronischen Anbindung eines nicht näher dargestellten Anhängers an ein nicht näher dargestelltes Fahrzeug und weist einen Schaltungsaufbau 2 auf. Der Schaltungsaufbau 2 ist über eine Speiseleitung 3 mit einer elektrischen Energieversorgungseinrichtung 4, beispielsweise einer aufladbaren Batterie des Fahrzeugs verbunden. In die Speiseleitung 3 geschaltet ist eine Sicherung 5, die beispielsweise bei einer Überspannung die Speiseleitung 3 von der Energieversorgungseinrichtung 4 zur Vermeidung beispielsweise einer thermischen Überlastung trennt.

Der Schaltungsaufbau 2 ist über eine nicht näher dargestellte Steckverbindung mit einer elektrischen Anlage eines Anhängers verbindbar, wobei von der elektrischen Anlage des Anhängers exemplarisch zwei Leuchtmittel 6 dargestellt sind. Bei diesen Leuchtmitteln 6 handelt es sich beispielsweise um die Beleuchtung des Anhängers oder auch um Leuchtmittel für die Bremsleuchten des Anhängers.

Ergänzend ist der Schaltungsaufbau 2 über eine elektrische Leitung 7 mit einer Speiseleitung 8 für einen elektrischen Anschluss einer Beleuchtungseinrichtung 9 des nicht näher dargestellten Fahrzeugs verbunden. Die Speiseleitung 8 ist ebenfalls über eine Sicherung 10 abgesichert und an einen Energieversorgungseinrichtung 11 angeschlossen, wobei es sich bei der Energieversorgungseinrichtung 11 ebenfalls um eine Bordspannung des Fahrzeugs bereitstellende Batterie und damit um die Energieversorgungseinrichtung 4 handeln kann.

In dem Schaltungsaufbau 2 ist eine Vorrichtung 12 vorgesehen, die den Durchfluss elektrischer Energie über die elektrische Leitung 7 sperrt, soweit der Schaltungsaufbau 2 über die Speiseleitung 3 mit elektrischer Energie versorgt ist und die, die elektrische Leitung 7 zur Versorgung des Schaltungsaufbaus 2 mit elektrischer Energie freischaltet, soweit der Schaltungsaufbau 2 über die Speiseleitung 3 nicht mit elektrischer Energie versorgt ist.

Die elektrische Leitung 7 ist demnach nur bestromt, wenn die Speiseleitung 3 keine elektrische Energie an den Schaltungsaufbau 2 liefert.

Ferner weist der Schaltungsaufbau 2 eine Verbindung zu einem Signalgeber 13 auf, der bei bestromter elektrischer Leitung 7 aktivierbar ist.

An den Signalgeber 13 ist ein optischer Signalgeber 14 und ein akustischer Signalgeber 15 sowie ein Funksender 16 in Ausführung einer Bluetooth-Schnittstelle angeschlossen. Über den Funksender 16 kommuniziert der Signalgeber 13 mit einem Smartphone 17.

Die Beleuchtungseinrichtung 9 ist als Bremslicht des Fahrzeugs ausgebildet.

Liefert die Speiseleitung 3 beispielsweise durch eine defekte Sicherung 5 keine elektrische Energie an den Schaltungsaufbau 2, so schaltet die Vorrichtung 12 die elektrische Leitung 7 derart frei, dass über die elektrische Leitung 7 und die Vorrichtung 12 eine Verbindung sowohl zu den Leuchtmitteln 6 als auch zu dem Signalgeber 13 gegeben ist.

Mit jeder Betätigung eines Bremspedals im Fahrzeug wird die Speiseleitung 8 bestromt und die Beleuchtungseinrichtung 9 des Fahrzeugs eingeschaltet. Gleichzeitig fließt elektrische Energie über die elektrische Leitung 7 zur Vorrichtung 12 und damit zum Signalgeber 13, der sowohl den optischen Signalgeber 14 und den akustischen Signalgeber 15 und bei Bedarf auch den Funksender 16 aktiviert.

Über den akustischen Signalgeber 15 wird dem Fahrzeugführer hierdurch signalisiert, dass der Schaltungsaufbau 2 nicht mehr über die Speiseleitung 3 mit elektrischer Energie versorgt wird, sondern dass die elektrische Energie ausschließlich über die elektrische Leitung 7 dem Schaltungsaufbau 2 zugeführt wird. In gleicher Weise signalisiert auch der optische Signalgeber 14, der beispielsweise im Sichtfeld des Fahrzeugführers angeordnet ist, eine entsprechende Schaltungskonstellation, die den Fahrzeugführer darauf aufmerksam macht, dass er bei nächster Gelegenheit für eine Instandsetzung der Speiseleitung 3, beispielsweise durch Austausch der Sicherung 5 sorgen sollte, um einen bestimmungsgemäßen und sicheren Betrieb des Anhängeranschlussgerätes 1 zu gewährleisten.

Handelt es sich bei der Speiseleitung 8 um die Speiseleitung, die die rückwärtige Fahrzeugbeleuchtung des Fahrzeugs mit Energie versorgt, so kann sichergestellt werden, dass auch die Anhängerbeleuchtung vom Leuchtmittel 6 bei Ausfall der Speiseleitung 3 bei Einschalten des Fahrlichts des Fahrzeugs mit elektrischer Energie versorgt werden. Auch in diesem Fall signalisiert der Signalgeber 13 über den optischen Signalgeber 14, den akustischen Signalgeber 15 und/oder Funksender 16 und das Smartphone 17 dem Fahrzeugführer, dass die elektrische Energie für das Anhängeranschlussgerät 1 nicht mehr über die Speiseleitung 3, sondern über die elektrische Leitung 7 zugeführt wird, so dass sich für den Fahrzeugführer auch hieraus ergibt, sich kurzfristig um die Instandsetzung der Speiseleitung 3, insbesondere der Sicherung 5 zu kümmern.

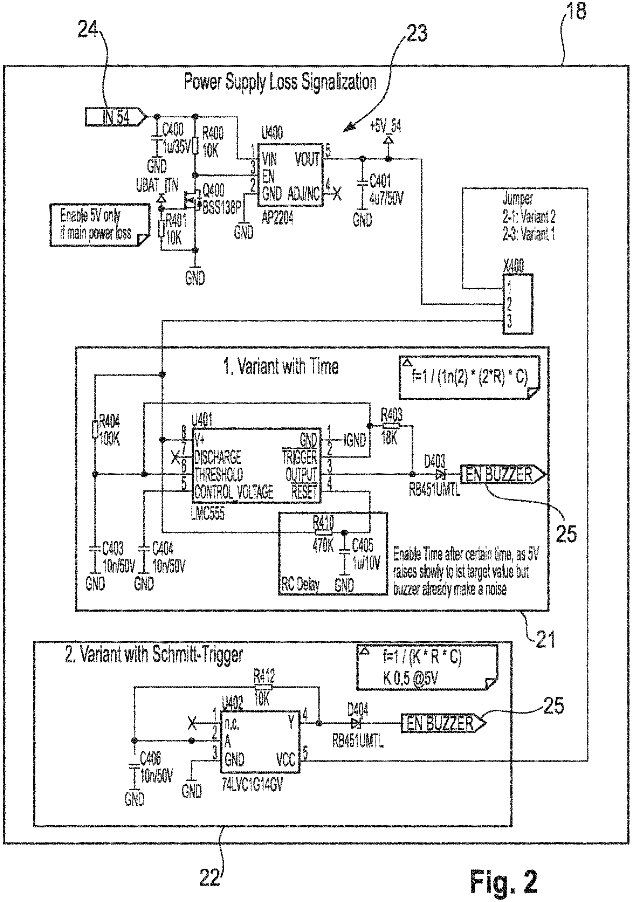

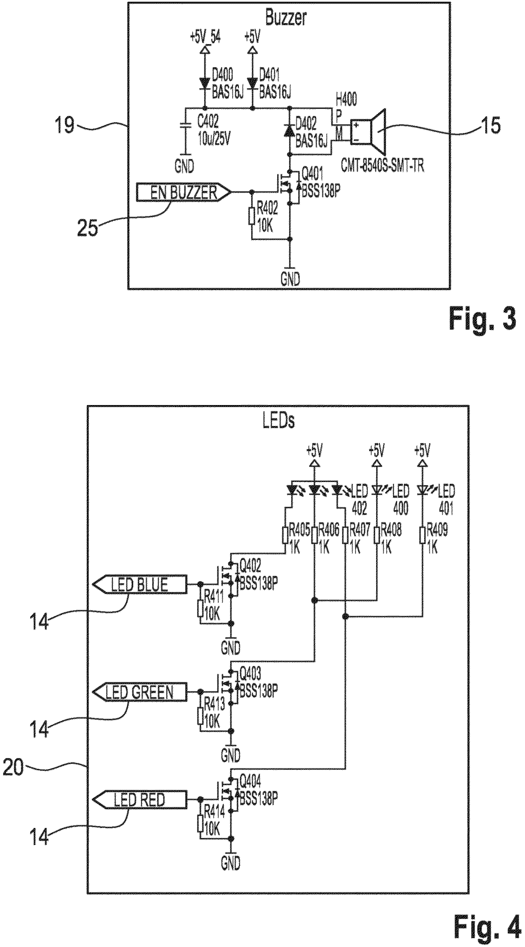

Die Figuren 2 bis 4 zeigen einen Schaltungsaufbau 18 der Vorrichtung 12 zur Durchleitung elektrischer Energie in dem Anhängeranschlussgerät 1 (Figur 2) und einen Schaltungsaufbau 19 des Signalgebers 13 für den akustischen Signalgeber 15 (Figur 3) bzw. einen Schaltungsaufbau 20 des Signalgebers 13 für optische Signalgeber 14 (Figur 4).

Figur 2 zeigt im Übrigen zwei mögliche Ausführungen einer Freigabe der elektrischen Leitung 7 über einen Timer 21 oder eine elektrische Komparator-Schaltung 22, insbesondere einen Schmitt-Trigger. Beide Ausführungen der Freigabe der elektrischen Leitung über den Timer 21 und die elektrische Komparator-Schaltung können auch einander ergänzend Anwendung finden. Dem Timer 21 bzw. der elektrischen Komparator-Schaltung vorgeschaltet ist ein Gleichspannungswandler 23, über den ein Bremslichtsignal 24 geführt ist. Der Gleichspannungswandler 23 ist über einen Kontakt einschaltbar. Die Beleuchtungseinrichtung 9, beispielsweise das fahrzeugseitige Bremslicht steuert den akustischen Signalgeber 15 nur an, wenn die Speiseleitung 3 negiert wird und als Signal für das Einschalten des Gleichspannungswandlers 23 genutzt wird. Bei einem Ausfall der Speiseleitung 3 wird somit der Gleichspannungswandler 23 eingeschaltet und das Signal des fahrzeugseitigen Bremslichts über die elektrische Leitung 7 an das anhängerseitige Bremslicht 6 weitergeleitet und gleichzeitig über den Timer 21 und/oder die Komparator Schaltung 24 an den Signalgeber 13 weitergeleitet.

Hierbei wird das freigegebene Bremslicht-Signal übe den Timer 21 geführt, um eine für den akustischen Signalgeber 15 nötige Frequenz zu generieren, die den akustischen Signalgeber 15, beispielsweise einen Summer ansteuert.

In gleicher Weise kann die nötige Frequenz über die Komparator-Schaltung 22 generiert werden. In der Figur 2 ist diesbezüglich ein Abgangskontakt 25 aus dem Timer 21 bzw. der Komparator-Schaltung 22 dargestellt, an den der Schaltungsaufbau 19 für den akustischen Signalgeber 15 oder der Schaltungsaufbau 20 für optische Signalgeber 14, beispielsweise LEDs angeschlossen ist.

**Bezugszeichen**

| | | | |
|---|---|---|---|
| 1 | Anhängeranschlussgerät | 18 | Schaltungsaufbau |
| 2 | Schaltungsaufbau | 19 | Schaltungsaufbau |
| 3 | Speiseleitung | 20 | Schaltungsaufbau |
| 4 | Energieversorgungseinrichtung | 21 | Timer |
| 5 | Sicherung | 22 | Komparator Schaltung |
| 6 | Leuchtmittel | 23 | Gleichspannungswandler |
| 7 | elektrische Leitung | 24 | Bremslichtsignal |
| 8 | Speiseleitung | 25 | Abgangskontakt |
| 9 | Beleuchtungseinrichtung | | |
| 10 | Sicherung | | |
| 11 | Energieversorgungseinrichtung | | |
| 12 | Vorrichtung | | |
| 13 | Signalgeber | | |
| 14 | optischer Signalgeber | | |
| 15 | akustischer Signalgeber | | |
| 16 | Funksender | | |
| 17 | Smartphone | | |

## Patentansprüche

1. Anhängeranschlussgerät zur elektrischen und elektronischen Anbindung eines Anhängers an ein Fahrzeug, umfassend einen Schaltungsaufbau (2) für die elektrische Verbindung mit einer elektrischen Energieversorgungsvorrichtung (4) des Fahrzeugs, beispielsweise mit einer Schnittstelle zur Verbindung mit einem fahrzeugseitigen Daten-Bus-System und einer prozessorbasierten Steuerung von elektrischen Funktionen des Anhängers, wobei der Schaltungsaufbau (2) über eine, mit einer Sicherung (5) abgesicherte Speiseleitung (3) mit der Energieversorgungsvorrichtung (4) des Fahrzeugs verbunden ist,
**dadurch gekennzeichnet,**
**dass** der Schaltungsaufbau (2) ergänzend über eine elektrische Leitung (7) mit einer Speiseleitung (8) für einen elektrischen Anschluss einer Beleuchtungseinrichtung (9) des Fahrzeugs verbunden ist, wobei die elektrische Leitung (7) nur bestromt ist, wenn die Speiseleitung (3) keine elektrische Energie an den Schaltungsaufbau (2) liefert und dass der Schaltungsaufbau (2) mit einem Signalgeber (13) verbunden ist, der bei bestromter elektrischer Leitung (7) aktivierbar ist.

2. Anhängeranschlussgerät nach Anspruch 1,
**dadurch gekennzeichnet,**
**dass** der Signalgeber (13) als optischer und/oder akustischer Signalgeber (14, 15) ausgebildet und für einen Benutzer des Fahrzeugs während eines Betriebs des Fahrzeugs wahrnehmbar ist.

3. Anhängeranschlussgerät nach Anspruch 1 oder 2,
**dadurch gekennzeichnet,**
**dass** die elektrische Leitung (7) mit der Speiseleitung (8) für ein Bremslicht (9) des Fahrzeugs verbunden ist.

4. Anhängeranschlussgerät nach einem der Ansprüche 1 bis 3,
**dadurch gekennzeichnet,**
**dass** der Schaltungsaufbau (2) eine Vorrichtung (12) aufweist, die den Durchfluss elektrischer Energie über die elektrische Leitung (7) sperrt, soweit der Schaltungsaufbau (2) über die Speiseleitung (3) mit elektrischer Energie versorgt ist, und die, die elektrische Leitung (7) zur Versorgung des Schaltungsaufbaus (2) mit elektrischer Energie freischaltet, soweit der Schaltungsaufbau (2) über die Speiseleitung (7) nicht mit elektrischer Energie versorgt ist.

5. Anhängeranschlussgerät nach einem der Ansprüche 1 bis 4,
**dadurch gekennzeichnet,**
**dass** der Signalgeber (13) als Funksender, insbesondere als Bluetooth-Schnittstelle ausgebildet ist.

6. Anhängeranschlussgerät nach Anspruch 4,
**dadurch gekennzeichnet,**
**dass** die Vorrichtung (12) einen Gleichspannungswandler (23) aufweist, der insbesondere elektrisch mit einem Timer (21) oder einer Komparator-Schaltung (22) verbunden ist.
